Europäisches Patentamt

European Patent Office

Office européen des brevets

(19)

(11) Publication number: **0 203 227 B1**

# EUROPEAN PATENT SPECIFICATION

(12)

(45) Date of publication of patent specification: **22.07.92**  (51) Int. Cl.⁵: **G01V 13/00**, G01V 1/16

(21) Application number: **85200868.9**

(22) Date of filing: **31.05.85**

(54) **Method and apparatus for analysing geophones.**

(43) Date of publication of application:
**03.12.86 Bulletin 86/49**

(45) Publication of the grant of the patent:
**22.07.92 Bulletin 92/30**

(84) Designated Contracting States:
**AT BE CH DE FR GB IT LI LU NL SE**

(56) References cited:
**FR-A- 2 417 781
US-A- 3 717 810
US-A- 4 003 018
US-A- 4 320 468**

**OIL AND GAS JOURNAL, vol. 77, no. 45, November 1979, pages 88-96, Tulsa, US; J.P. CONVERT et al.: "System aids field testing of geophones"**

(73) Proprietor: **HALLIBURTON GEOPHYSICAL SERVICES, INC.
6909 Southwest Freeway, P.O. Box 36306
Houston Texas 77236(US)**

(72) Inventor: **Ouellhorst, Jan Willem
11, Sportlaan
NL-2566 GK The Hague(NL)**

(74) Representative: **Keyser, Johannes Maurits L. F. et al
EXTERPATENT Willem Witsenplein 4
NL-2596 BK The Hague(NL)**

EP 0 203 227 B1

**Description**

The invention relates to a method of analysing geophones, comprising sending pulses of electric currents through the geophones, measuring the output voltages and/or currents as functions of time comprising the total impulse response supplying information about the geophones, and comparing this information with reference information stored or computed, after which at least the differences between information measured and the reference information are determined for further assessment and/or processing and/or are displayed.

The invention also relates to an apparatus for analysing geophones for performing the method, comprising means for connecting a geophone or a geophone string, a pair of terminals for at least one source of voltage or current to be sent through the geophone(s), means to detect the response of the geophone(s) to voltage or current pulses sent through it (them), means to store or compute reference information, and means to enable a comparison to be made between the impulse response of a geophone or a geophone string tested and the reference information.

Such method and apparatus are known in the art of seismic work, particularly from the article "System aids field testing of geophones" by J.P. Convert et al. published in Oil and Gas Journal, Vol. 77, November 1979, pages 88-96, Tulsa, US. According to this article, it is the complete equipment used to perform seismic investigation which is also used to test the system, i.e. the whole equipment comprising the data acquisition units and the geophone groups in recording position, in the spread. The test only indicates whether or not the equipment is in order, but does not tell what is wrong. Information on the geophone strings can only be deduced after testing the DA-units closed by resistances. Moreover, what is determined is the pulse response which may give a rough indication of the characteristics of the geophones, but there is no provision for individually determining parameter values for the geophones with a certain accuracy as would be desirable to draw conclusions on defects in the geophone strings.

There do exist independent testers for the geophones alone, and it is stated at the outset that, although the disclosure of the above-mentioned article is the closest prior art regarding the method, the invention envisages an independent testing instrument which can be used in the field ("field tester").

Both with the method and the apparatus known from the article as well as with other, even the most modern testing equipment which has been known up to now - and which can be microcomputer-based equipment capable of automatically measuring up to 8 parameters, either on single geophones or on whole strings of geophones of any configuration - one has to face several problems.

First problem is the considerable influence which termperature has on the accuracy of the measurements performed, both in terms of immediate changes in the detectable geophone parameters and in terms of instabilities or changes in operating characteristics of the electronic circuitry used in detection and analysis. This problem is the more serious in view of the widely different circumstances under which geophones are used.

A limitation is in the fact that known equipment presents the information - although in any form desired: digitally on a display, or on a printer, on an external video monitor and including a facility for recording in memory - but it leaves to the operator the interpretation and the decision on whether or not a particular individual geophone string is within tolerances. More specifically, according to the above-mentioned article, the test results are presented in form of curves which are to be compared visually with reference curves. This implies that the influence of the relevant parameters can at best be appreciated qualitatively. Although the total impulse response curve may be analysed numerically by means of a small amount of software in order to simplify the comparison, there are no means to assess individual parameters in numerical values.

Further problems and limitations relate to the fact that independent geophone testers, although they are used in a laboratory or office, have their widest applications in the field. Some of them are quite heavy and difficult to handle. As far as storage equipment takes the form of floppy discs, it can be observed that these are difficult to handle under rough circumstances, especially in view of the influence of dust and sand.

The same is also the case for testing stands, to which the above-mentioned article does not particularly refer, but which are known in the art, and which are used to produce mechanical excitation for one or more geophones in view of sensitivity and polarity measurements, and which necessarily must provide a good isolation against external vibrations. Although these isolating driver stands are available in types which may contain up to 24 geophones in one string, the use thereof requires the whole string to be taken up from the field in order to perform a check.

In order to appreciate the nature of these problems, one should consider that every day field work might involve some 1800 strings on one crew. When on a rotational basis about 400 strings would have to be checked every day, and each test would take 3 minutes - not yet counting the time involved in replacing defective strings - the analysis would require 20 man hours per day.

In view of all this the present invention has for its aim to provide both a novel method and novel apparatus with which all of these limitations and problems can be reduced. More specifically the invention wants to virtually eliminate the influence of temperature differences on the precision of measurements, to provide equipment which can be used both in laboratory or office and in the field, the field unit being highly reliable and accurate, and nevertheless relatively cheap, light and simple to handle, not sensitive to field circumstances such as dust; furthermore, the invention aims at a measurement time of only a few seconds, a quantitative presentation of parameters measured which, at choice, is either individual and specific, or will lead to an automatic calculation of whether the geophone or string in question is or is not within given specifications and tolerances, so that a simple Go or NoGo signal can be given, which will make the testing operation less dependent on professional skill. In addition to this, the invention wants to obtain a number of further advantages and features such as a solid state memory capable of containing a library of parameters of known geophone types, and a solid state working memory which will keep all entered parameters until they are cleared, even if the equipment is switched off from power.

The most important feature is the considerable reduction of the influence of environmental temperature.

To this end the method according to the invention is characterized in that any one or more of the following parameters:

damping, resonance frequency, sensitivity

of a string of geophones which is measured are individually derived from the impulse response and are compared with corresponding reference parameters determined for a string of geophones of the same type as those tested, and with equal numbers in series and in parallel connections.

By taking the parameters of the impulse response - instead of comparing the amplitude and shape of the response curve to the pulse with previously stored or computed good response in form of amplitude values - the invention lays the basis for eliminating the influence of temperature and for an automatic assessment of the result of the measurement instead of a personal interpretation.

Therefore a preferred embodiment of the method according to this invention is characterized in that before a measurement on a string to be tested, a calibration measurement on a precision ohmic resistor is performed.

Because precision resistors are available in the market, which are highly insensitive to temperature changes, this feature ensures a virtually complete elimination of temperature influences, both on the geophones and on the electronic equipment. A calibration measurement can be performed each time before a measurement. This is particularly possible because of the very fast response time which the equipment of the invention can realize.

There is one additional problem which has not yet been mentioned above, i.e. the limited accuracy of measurements in case of geophones which have a high damping, either internally, or by a shunt. In the field geophones are usually damped to 0.65 or 0.70 of the critical damping. With such high damping values the accuracy in the determination of certain parameters is quite low.

The invention also provides a solution for this problem in that a negative resistance network is coupled in parallel to the geophone terminals.

Such negative resistance network, the value of which can be adjusted according to the specifications of the geophones under test, will reduce the damping to such an extent as desired to obtain the necessary precision for all parameters concerned.

As said above, according to the present invention the pulse response test is used to derive sensitivity, damping and resonance frequency. Moreover, the current sent through the geophone(s) for observing the pulse response, is utilized to calculate a further parameter of the geophone coil, to wit its DC resistance value.

According to the abovementioned publication, the pulse response of the geophones and the recording system preamplifiers is analysed to determine the harmonic distortion of the combination. Preferably, according to the invention, distortion tests on the geophones are carried out on the basis of precise sine wave currents sent through the geophone(s), in contrast to the oil & Gas Journal where the amplitude is used to estimate distortion.

More particularly this is done in the way that distortion tests are carried out on the basis of precise sine wave currents sent through the geophone(s), the output of the geophone(s) being treated by a fast Fourier transform in order to obtain the value of each of the harmonics of the input sine wave, from which the total distortion is calculated as a fraction of the energy contained in the base sine wave, and the distortion being determined as an average over a number of sine periods, preferably 16 periods.

Preferably a phase measurement is carried out on the geophone(s) on the basis of a sine wave produced in the same way as the sine wave for the distortion test.

Depending on whether or not the geophone(s) tested are within acceptable tolerances, an overall Go/NoGo signal is produced.

The invention not only relates to the method, but also to apparatus for performing the method. Starting from the prior art apparatus as defined in the second paragraph above, it is now characterized according to the invention in that the apparatus is an apparatus independent of the seismic recording system and in that it comprises:

(a) means to automatically derive from the response voltage and/or current, individually and quantitatively, any of the following parameters of the geophone(s):
- damping, resonance frequency, sensitivity,

(b) means to store or compute corresponding reference parameters quantitatively,

(c) means to compare the isolated measured parameters with the reference parameters, and

(d) means to display the differences found in the comparison.

Work is accelerated and moreover made more reliable because of being still more independent of environmental influences, when means are provided to store the parameters derived from one measurement as the reference parameters for at least one subsequent measurement. This is made possible because, in practice, the composition of strings in the field, in terms of numbers and the parallel or series connection thereof, will be identical for the whole measuring site.

In order to be able to realize the various preferred steps in the method, as discussed above, the apparatus is, equally preferably, further characterized by any of the following features:
- means are provided for switching in a precision resistor in parallel to the terminals for connecting the geophones;
- a negative resistance network can be switched in, in parallel to the geophone terminals, and the value of the negative resistance network is adjustable;
- a memory is provided which contains, in numerical form, a sine wave, and which memory is followed by a D/A converter for performing distortion tests;
- a circuit is provided which is capable of performing fast Fourier transforms on a geophone output signal.

The invention will now be clarified with reference to the accompanying drawings.

Figure 1 is the equivalent electric circuit of a geophone.

Figure 2 is a typical example of a pulse response curve.

Figure 3 is a block diagram of a preferred embodiment of the apparatus according to this invention.

Figure 4 is a more detailed block diagram of the data acquisition system indicated by 2 in fig. 3.

Figure 5 is a circuit diagram to illustrate the feature of the negative resistance.

Figure 6 is a similar circuit diagram illustrating the use of the precision resistor.

Figure 7 is a flow diagram of a calibration and measurement with the use of the precision resistor depicted in fig. 6.

Figure 8 is a flow diagram of the program as far as the control of the system itself is concerned.

Figure 9 is a similar flow diagram of the "test" mode of operation.

Survey of parameters to be measured

The following parameters are entered from the keyboard or by retrieving them from a user programmable library which may contain the specifications of preferably 200 geophones:
- resonance frequency and tolerance in %
- D.C. resistance and tolerance in %
- damping and tolerance in %
- sensitivity and tolerance in %
- moving mass
- $R_tB_cf_n$ (the well known geophone constant which is a product of total resistance, damping and resonance frequency)
- series or parallel configuration.

On this basis, the various adjustable values of currents etc. can be chosen and thereupon for single geophones a step response test is used for the following parameters:
- D.C. resistance
- damping
- resonance frequency and
- sensitivity.

Separate measurements are carried out for
- phase,

- distortion
- polarity and
- leakage.

For geophone strings the first measurement carried out is on a reference string, whereupon changes in following strings as compared with the reference string are measured, again by a step response test, for
- D.C. resistance
- damping
- resonance frequency and
- sensitivity.

Subsequently, again by separate measurement,
- phase
- distortion and
- leakage

are tested.

## Theoretical basis for the measurements

Geophones as they are commonly used, comprise a magnet and coil system, in which one of these elements is stationary, the other one being spring mounted and movable. Seismic vibrations will make the coil vibrate relative to and in interaction with the magnetic field. This will produce an electromotive force over and a current through the coil, which can be detected and from which data on the seismic vibrations can be derived.

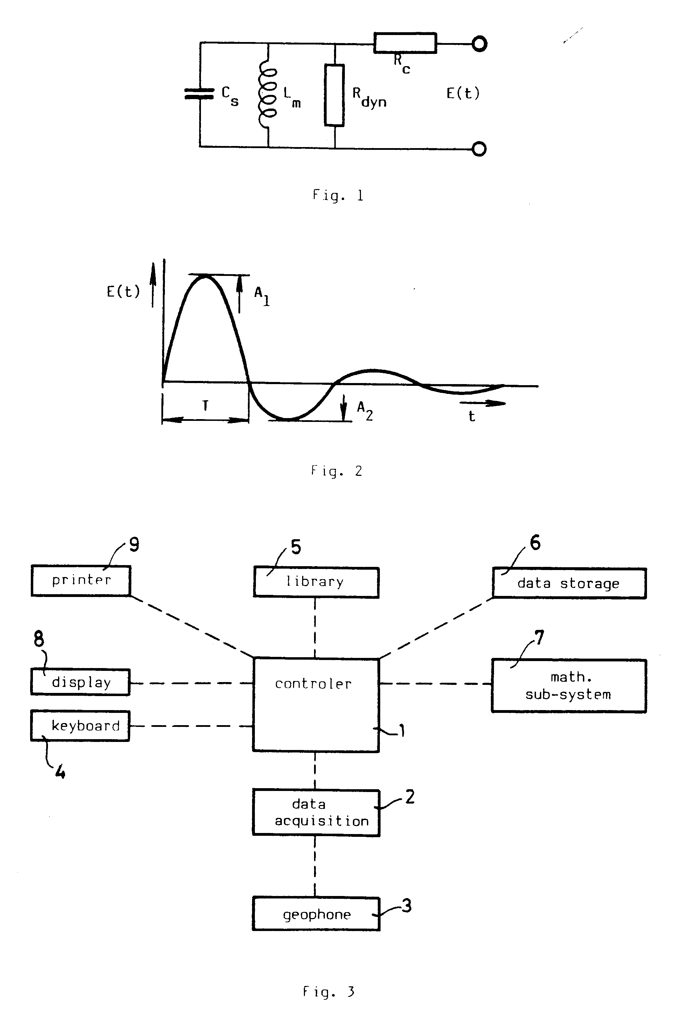

In order to analyse the geophone's behaviour an equivalent electrical circuit can be used which is represented in fig. 1. It is characterized by the following formulae

$$\omega_o = \frac{1}{\sqrt{L_m C_s}} \qquad (H_z) \qquad\qquad (1)$$

$$C_s = \frac{m}{G^2} \qquad (F) \qquad\qquad (2)$$

$$L_m = \frac{1}{\omega_o^2 \cdot C_s} \qquad (H) \qquad\qquad (3)$$

$$R_{dyn} = \frac{G}{m \cdot 2b_o \cdot \omega_o} \qquad (\Omega) \qquad\qquad (4)$$

in which the symbols have the following meaning:

E(t) = output voltage (V)
$\omega_o$ = $2\pi f_o (H_z)$
$f_o$ = resonance frequency ($H_z$)
m = eff. moving mass (kg)
$R_{dyn}$ = dynamic resistance ($\Omega$)
$b_o$ = damping
G = sensitivity (Vsec/m)
$R_c$ = coil resistance ($\Omega$)

It is to be understood that E(t) is the output voltage of the geophone when it is in use. When analysing a geophone, as is the subject of the method and apparatus according to the present invention, a current from an external source is sent into the geophone.

The step response test is used to obtain 4 geophone parameters. In this measurement technique a DC current is sent through the coil and this current is stopped suddenly at time zero, which is the starting time of the measurement. By the current the coil will be lifted from its rest position and take a certain deviation from this rest position, which will be dependent on the current value in relation to the string characteristics.

5

At time zero the coil will start to move back to the rest position, following a certain response curve depending on damping, resonance frequency and sensitivity of the geophone. A typical example of the response curve is given in fig. 2, which depicts the output voltage as a function of time.

The parameters just mentioned can be calculated from an analysis of this response curve.

On the basis of well known theoretical considerations which are not repeated here, the response can be expressed as the product of a sine function and an exponential function. By differentiation of this function, expressions for the extremes can be found, in which also the zero crossing times will occur. When taking T to be the first zero crossing time and $A_1$ and $A_2$ being the first and second extreme value of the geophone's output $E(t)$, the following expressions can be derived:

$$\text{Damping:} \quad b_o = \sin \text{ arc tang } \frac{\ln(A_2/A_1)}{\pi} \tag{5}$$

$$\text{Resonance frequency} : f_o = \frac{1}{2T \cos \text{ arc tang } \frac{\ln(A_2/A_1)}{\pi}} \text{ (Hz)} \tag{6}$$

$$\text{Sensitivity} : G^2 = \frac{2\pi f_o mA_1}{I} e^{\frac{\text{arc tang} \frac{\sqrt{1-b_o^2}}{b_o}}{\frac{\sqrt{1-b_o^2}}{b_o}}} \text{ (Vsec/m)}^2 \tag{7}$$

It is pointed out that sensitivity, as used here, is understood to be voltage sensitivity. It is defined as the output voltage (in volts) of the geophone, which is produced by a certain velocity of the moving coil (expressed in meters/second).

Furthermore, it is pointed out that the coil resistance $R_c$ is calculated from the measurement of the voltage at the terminals of the geophone resulting from an accurate current from a current source which is sent through the coil, using the well known Ohm's law:

$$R_c = \frac{V_c}{I_c} \quad \text{(Ohm)} \tag{8}$$

This measurement can be done in the most efficient way when $I_c$ is taken to be the current which is sent through the geophone for the pulse response test, i.e. the coil resistance can be derived from the voltage over the geophone during the flowing of the direct current before time zero of the pulse response measurement.

## The overall system

Fig. 3 is a block diagram of the data processing system of the complete geophone tester. A microprogram-based controller or microprocessor 1 has data communication lines with a data acquisition system 2, which in turn communicates with the geophone or geophones 3, which will be one individual geophone, a reference string or a string to be tested, as the case will be.

A keyboard 4, which can be a 16-key dedicated keyboard, can be used to enter instructions, or parameters. Many data, however, will be taken from the library 5, which will be a programmable solid state library module which may contain the specifications of known geophones. It can be exchanged.

Data storage module 6 is also realized as a solid state memory to record test data. Module 6 can also be exchanged so that its contents can be elaborated at the office. Furthermore, there is a mathematical subsystem 7, dedicated to performing specific mathematical operations. It allows the use of goniometric functions, especially for the fast Fourrier transform used in the distortion test, as well as the use of floating point variables. Such an arithmetic chip enables to speed up calculations, whilst the program can be kept simple.

The smallest unit will also contain a display 8, which in practical realisation will be an LCD.

The system described sofar will constitute the smallest independent unit which, naturally provided with a battery as the source of energy, is a complete geophone tester for field use. If desired, data can be transferred to a processing centre by exchanging memory modules 6. Also if desired, there can be a communication to a printer 9 which, in practical realisation, can be a thermal printer. Such printer can be used in the field, but it does take some space and it does require an additional capacity in the source of energy.

## The data acquisition system

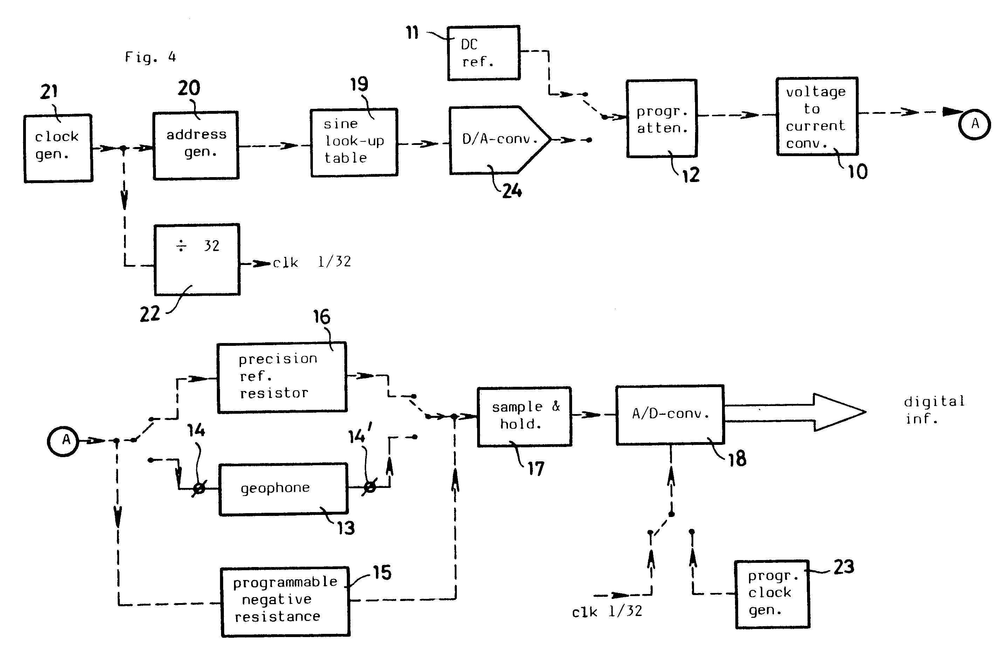

The data acquisition system 2 (fig. 3) is represented in more detail in fig. 4.

For performing the pulse response test, the current source is a voltage to current converter 10, driven by the output of a DC reference 11, which is attenuated by means of a programmed attenuator 12.

The current source 10 drives the geophone or geophones 13, which are connected between terminals 14, 14' and which are those to be used as a reference as well as those to be tested. Further details of the comparative method using a reference, will be given below.

A negative resistance network 15 is connected to the output of the current source 10, in order to be able to add the negative damping to the geophone which is tested. Further details of this idea of a negative damping will be given below.

Another special feature is the use of a precision reference resistor 16, to calibrate the system before each test, as one means to eliminate temperature influences. Also on this reference resistor idea further details will be given below.

The signal to be measured is sent, via a sample and holding unit 17 to an analogue-to-digital converter 18 in order to be converted into a digital signal which can be outputted.

The sine wave which is used for the distortion test is registered numerically in ROM 19. This ROM preferably is a 1024 bit memory where the sine wave is recorded with a resolution of 12 bits. Via address generator 20 ROM 19 is read by the first programmable clock generator 21 which produces the desired frequency; the reading is converted into an analogous signal in D/A converter 24. In this way a sine wave will be produced which is undistorted to a high degree, while the desired amplitude is adjusted by attenuator 12.

In view of the resolution of 12 bits chosen for the registration of the sinewave in memory 19, A/D converter 18 preferably is a 16 bit converter. This 16 bit resolution is chosen because of the high dynamic range, which allows to avoid gain ranging, essential in a 12 bit system to use the whole available resolution. A/D converter 18 preferably is of the lower power, high performance CMOS type.

In view of the use of fast Fourier transforms (FFT's) for testing the harmonic distortion, the sine wave is sampled 32 times in each full period. A full identity of the final analogous value is assured when this sampling is controlled by a clock signal having a frequency of 1/32 of the original frequency of clock generator 21. To this end a divider by 32, indicated by a reference numeral 22, is provided, the output of which can be switched to a control input of A/D converter 18, as indicated in the diagram of fig. 4 (it is recalled that 1024:32 = 32).

For the pulse response test, on the basis of the DC-pulse from source 11, the conversion command to A/D convertor 18 comes from programmable clock generator 23.

## The comparative method

One major problem in testing geophones, and particularly geophone strings, is the great influence of temperature. There is temperature influence both on the properties of the geophones themselves and on the measuring equipment. The influence of both factors can be considerably reduced by the comparative measuring method of this invention.

This does not necessarily imply that a reference string and the string to be tested, are connected and measured simultaneously. It will do perfectly well when the measuring equipment has only one set of terminals, to which first a reference string is connected and measured, whereupon all relevant parameters derived from the measurement of the reference string are recorded in a memory of whatever form. Thereupon the string to be tested can take the place of the reference string at the terminals and each of the parameters which are measured can be compared with the corresponding reference value in memory. The difference may be presented to the user, either as a display of the differences of the individual parameters

EP 0 203 227 B1

or, when this mode of operation is preferred, elaborated in the decision making process which in the end gives a GO/NoGo presentation. In any case it will be clear that the result can also be recorded again, both in local storage or in central storage.

Following strings can be tested and compared, in the same way, with the reference parameters, and this may be continued as long as there are no considerable changes in temperature conditions, both in the field at the location of each string to be tested and the location of the reference string, and in the electronic equipment. As soon as the operator would deem a risk of temperature changes to be present, he would have to register parameters of one string as the reference parameters for succeeding measurements.

The comparative method is particularly useful for strings in the field. Although it is quite well possible to apply the same comparative method for individual geophones, there is usually less reason to do so because the testing of individual geophones will usually be done in a central station or laboratory rather than in the field, so that temperature conditions will be less liable to changes.

The precision reference resistor

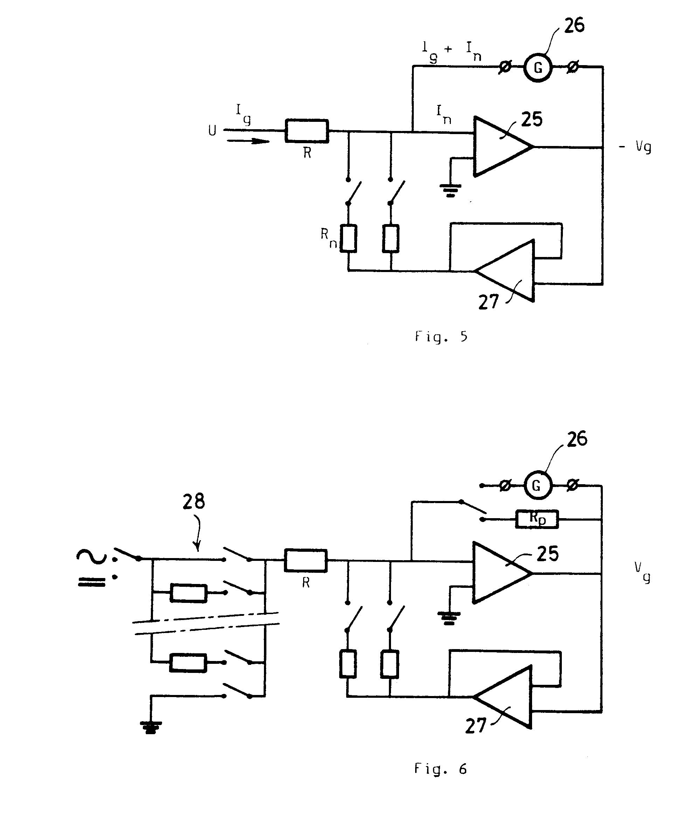

The second feature to eliminate temperature influence is the use of a precision resistor as a reference. Fig. 6, which depicts basically the same circuit as fig. 5 illustrates that the precision resistor $R_p$ can be coupled into the feedback loop of amplifier 25 by means of a switch, in other words, it is arranged in parallel over the set of terminals which are used to connect the geophone or geophone strings.

Precision resistors are commercially available which have a tolerance of 0,01% and a temperature coefficient of $\pm$ 1 ppm/ºC in the temperature range from 0º to +60ºC and $\pm$ 5 ppm/ºC in the temperature range from -55º to +155ºC.

Fig. 6 also illustrates a resistor ladder 28 which can be used to adjust the constant current which is sent through the geophone.

In order to calibrate the circuit, with $R_p$ inserted, the current is first adjusted at zero by opening all switches in network 28 except the one grounding the input. In this connection, the presence of a voltage at the point indicated $V_g$ is an offset in the system.

Next step is to adjust the current through $R_p$ at the value which is intended to be used for the geophone 26 to be tested (and depending on the parameters of this particular geophone type). The voltage is measured again, and after deduction of the offset voltage the real voltage over reference resistor $R_p$ is known.

This is a calibration independent of whether the current through the resistor has the exact desired value, but more particularly independent of the properties of the A/D converter 18 (fig. 4) and temperature influences on these properties.

Thereupon, the voltage over the geophone 26 is determined, which permits to deduce the DC resistance thereof from the ratio between the voltage over the geophone and the voltage over $R_p$. In this way the geophone resistance is known basically with the same accuracy as the accuracy of the resistance of $R_p$.

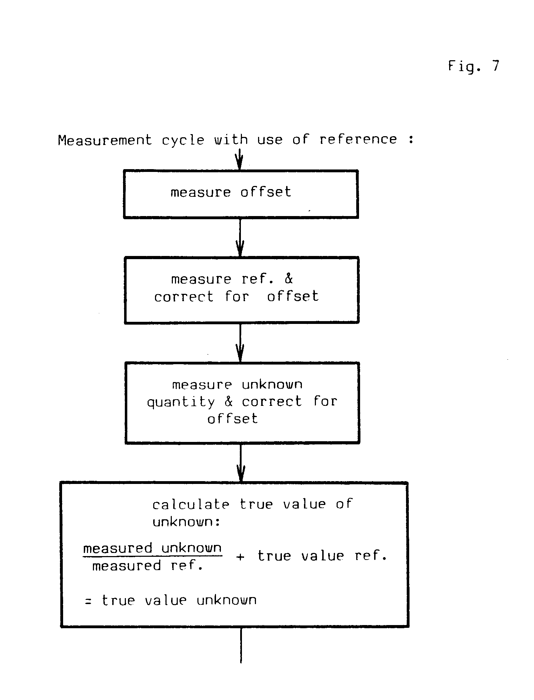

In this way the system can be calibrated simply before each test. Fig. 7 depicts these steps in a flow diagram.

Negative damping

At the step response test a higher damping results in a lower second peak $A_2$ (see fig. 2). This makes it more difficult, and sometimes even impossible to detect a second peak, irrespective of whether the damping results from a high internal geophone damping or from the use of a damping resistor.

Especially for a field tester it is important to find a solution for these damping problems, because in the field all geophones are usually damped by an external resistor to 65 or 70% of the critical damping.

In order to measure the distortion, the geophone - or the geophone string, as the case may be - is driven with a distortion free electrical signal; the distortion produced is measured at the terminals where the geophone or string is connected.

It is recalled that harmonic distortion is the percentage of harmonics with respect to the fundamental frequency.

When performing this measurement, several corrections have to be made. One correction follows from the fact that $R_c$ and $R_{dyn}$ (see the electrical equivalent circuit of fig. 1) have a voltage dividing function with respect to what can be considered as the generating voltage of the distortion product within the geophone. A second correction has to be introduced in case a geophone is tested which is provided with an external damping by means of a resistor connected in parallel to the geophone itself.

8

The two most important factors affecting the distortion of a geophone are non-linearity of the strings and inhomogeneity of the magnetic field. Both factors tend to increase at higher excursion values, resulting in a higher distortion. Therefore it is important to test the distortion at the right excursion, which is determined by the right value of the current from the source which is used to drive the geophone during the test.

According to the invention a reduction of the damping is achieved by applying a negative resistance network as represented in the circuit diagram of fig. 5. Amplifier 25 represents the original current source. It is coupled as an operational amplifier having one input on earth, the other input being the end of a feed back loop which contains the geophone 26. Because of the inherent properties of the operational amplifier - input impedance ∞ and gain ∞ -the second (upper) amplifier input will also be at zero voltage. Therefore an input voltage U to the circuit will produce a current $I_g$ = U/R. This produces a compensating current $I_g$ through the feedback loop, i.e. through the geophone, independent of the geophone impedance $Z_g$. Amplifier 25 is an inverting amplifier and the voltage over the geophone will therefore be $-V_g$.

An amplifier 27 is coupled between the output of amplifier 25 and the second input thereof via a resistor $R_n$ and a switch 28. When switch 28 is closed, amplifier 27 will invert the geophone voltage $-V_g$ and produce a current $I_n$ which is determined by the value of $R_n$. This current $I_n$ is added to $I_g$ in the feedback loop. Therefore, the voltage over the geophone now becomes:

$$V_g = Z_g (I_g + I_n)$$

substituting $I_n = \frac{V_g}{R_n}$ as given above. One may now deduce that:

$$V_g = \frac{I_g}{1/Z_g - 1/R_n} \, .$$

From this last expression we find a negative resistance $R_n$ virtually connected in parallel to the geophone impedance $Z_g$.

In practice it is possible to use a series of resistors of varying values $R_n$, each provided with their corresponding switch such as 28, so that the operator, or the program, can make a choice.

In this way, the amplitude $A_2$ of the second extreme can be made as high as desired. For example, in a practical case, where $A_1/A_2$ would be 15, the negative damping can be used to reach $A_1/A_2$ = 1.20, i.e. the second extreme or peak is 80% of the first peak. This makes the accuracy of the step response test much better and allows for a much higher noise level.

In case of the distortion test it can be shown that an increase by a factor of 20 or more can be obtained as compared with the signal which is measured with the original geophone having a 65% of critical damping. Also here, therefore, the result is a much more accurate test.

The FFT-method

The harmonic distortion of a string of geophones or of a single geophone is determined by the use of fast Fourrier transforms. This makes it possible to measure the distortion of a geophone without having to go to extremes in order to isolate them from outside vibrations.

Distortion is measured by taking an average over 16 periods of the sine wave produced by sine wave generator 19-21 (fig. 4). As a result of distortion the wave coming out of the geophone(s) may contain harmonics of various orders and of varying magnitude. The harmonic distortion can be measured up to the 16th harmonic if desired, although regularly it will be sufficient to go as far as the 3rd harmonic. The FFT - which is an operation known in itself as a means to transform the domain of time into the domain of frequencies - will give each harmonic frequency with the associated amplitude. In the end the total of the energy contained in the harmonic frequencies is determined and is usually expressed as a percentage of the energy of the basic sine wave.

The phase measurement

There will also be a facility to perform a measurement of the phase difference between the signal by which the geophone or string of geophones is driven and the output signal. This can be used as a check on the measurement of damping, for those users who prefer so.

The phase measurement can be performed on the basis of a sine wave taken from the same generator

9

19-21 (see fig. 4) as the sine wave for the distortion test. In this case the programmable clock 21 is set at an appropriate frequency, which will be at 1.4 times the resonance frequency of the geophone under test.

The flow diagram of the program.

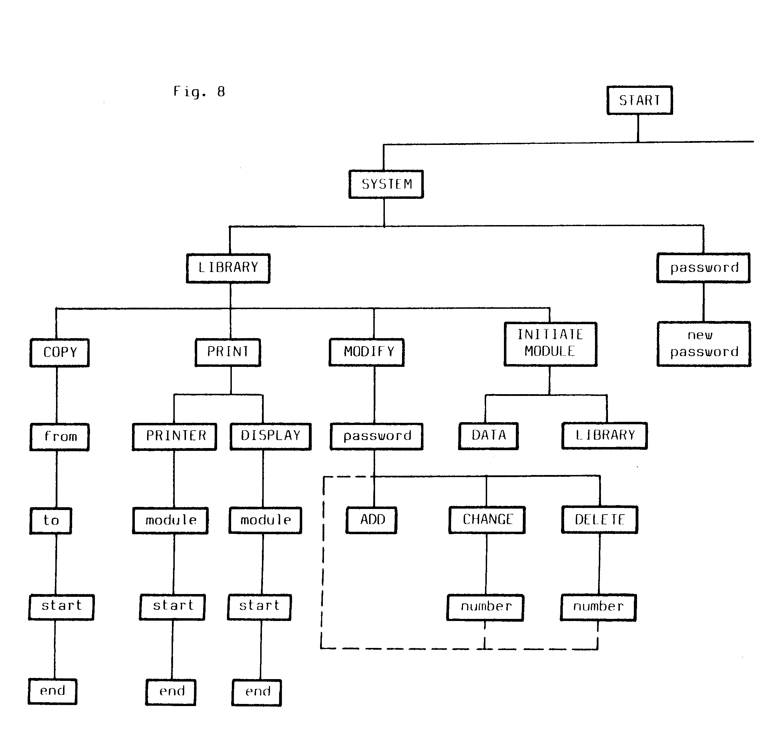

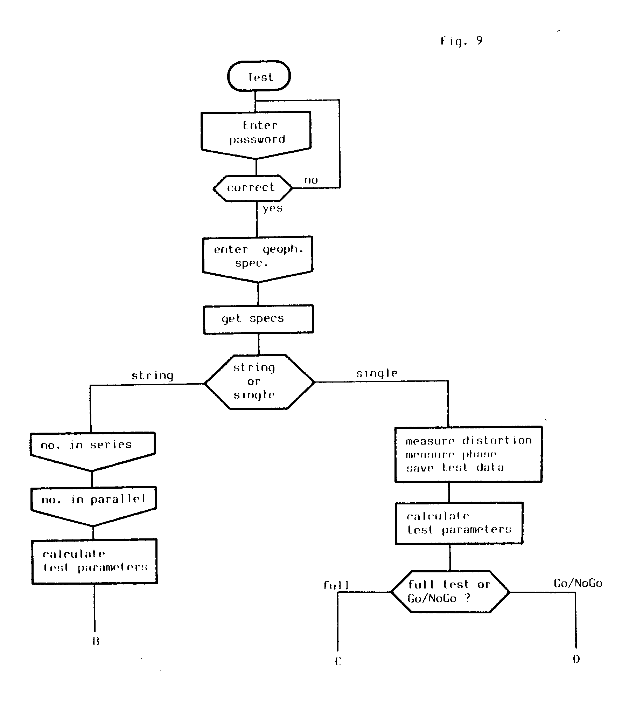

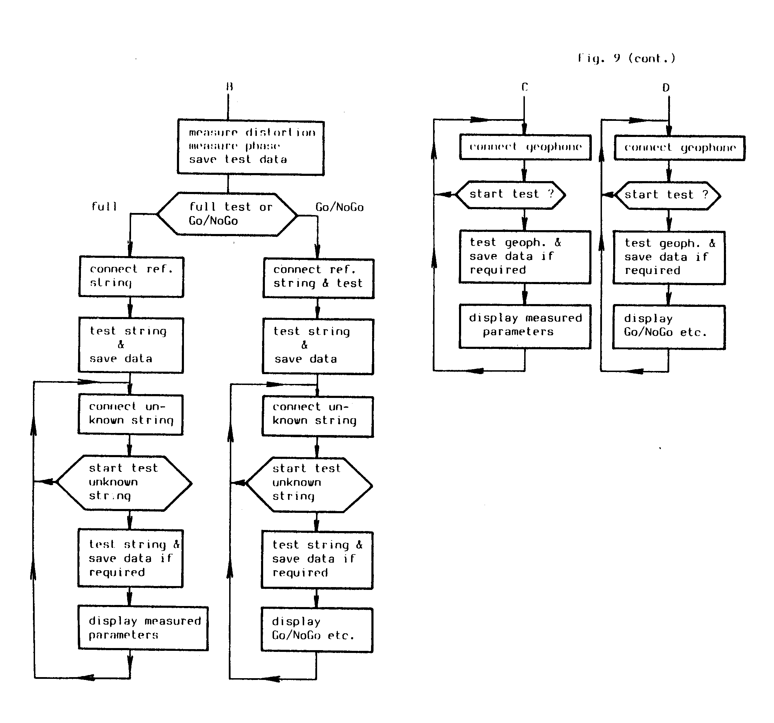

In order to illustrate and further clarify the method and the apparatus of this invention, flow diagrams of the program are given in figures 8 and 9.

At the start, the first choice to be made is between "system" and "test".

"System" is represented in fig. 8. The first choice here is between "library" and "password". "Library" contains all possibilities to "copy" "print" (on screen or printer) or "modify" contents and to "initiate" new modules for "data" or"library" use.

For modifications a password is needed and in the division "password" it is possible for the authorised user to open a new password.

In the "test" mode illustrated in the flow diagram of fig. 9 a password is asked again. When this is entered correctly, the specifications of the individual geophone or string to be tested can be entered. This can either be done by a simple reference to a specification file number in the library or, in case a geophone is to be tested which has not yet been entered in the library, its parameters can be entered by means of the keyboard.

Then a choice is to be made between a "string" or a "single" geophone.

For a "string" test the number of geophones connected in series in the string is asked, and also the number which is connected in "parallel". On the basis of this information, the microprocessor calculates the test parameters. These parameters may include the current value for the pulse test to be sent through the string (compare the resistance ladder 28 in fig. 6), the value of the negative resistance in case it applies, the frequency and amplitude of the sine wave for the distortion test. These parameters, of course, are registered in the working memory.

Next instruction to be entered is whether or not "distortion" and/or "phase" are to be measured and whether or not the data of all strings to be measured are to be saved, i.e. stored in the data module 6.

Then a choice must be made between performing a full test, i.e. a test with display and/or registration of all individual parameters, or one on which the system itself, on the basis of information on tolerances as recorded in library and/or memory, will decide whether or not the geophone or string tested meets the standards, so that a simple "Go/NoGo" signal is displayed, including display on the screen of the parameter for which the geophone or string is rejected.

In either case the reference string is to be connected and tested and the test data are saved in the working memory of the central processor, and thereupon the unknown string can be connected. Such test can actually be started and the parameters which are measured will be displayed. The display preferably also contains the high/low indication in case it is concluded that the string is out of its specifications.

The final result of the whole initiation phase, i.e. up to the moment of connecting the unknown string, is stored in the storage module. Because this is a solid state memory, all this information is kept there safely, also when power is switched off. After switching on again, the test can immediately be started by pushing the "start" key after connecting the next string to be tested.

In the "Go/NoGo" mode, the final result will be a display of the instruction "Go" or, in case any parameter is out of specifications, "No Go". Preferably also the rejected parameter is displayed as well as a high/low indication of this parameter. Also it is possible to produce an audible warning signal, which makes the use on the line still more easy.

When single geophones are to be tested, one may immediately proceed to the stage of stating whether or not distortion and phase are to be measured and test data are to be saved. Also connecting and testing a reference is skipped, and for the remainder the program is carried out in the same way as for testing strings as described above.

**Claims**

1. Method of analysing geophones, comprising sending pulses of electric currents through the geophones, measuring the output voltages and/or currents as functions of time comprising the total impulse response supplying information about the geophones, and comparing this information with reference information stored or computed, after which at least the differences between information measured and the reference information are determined for further assessment and/or processing and/or are displayed **characterized in that** any one or more of the following parameters;
   damping, resonance frequency, sensitivity

of a string of geophones which is measured are individually derived from the impulse response and are compared with corresponding reference parameters determined for a string of geophones of the same type as those tested, and with equal numbers in series and in parallel connections.

2. The method according to claim 1, **characterized in that** before a measurement on a string to be tested, a calibration measurement on a precision ohmic resistor is performed.

3. The method according to claim 1 or 2, applied on geophones which have a high damping, either initially, or by a shunt, **characterized in that** a negative resistance network is coupled in parallel to the geophone terminals.

4. The method according to any of claims 1-3, **characterized in that** the current sent through the geophone(s) for producing the pulse response, is utilized to calculate the geophone coil DC resistance value.

5. The method according to any of claims 1-4, **characterized in that** distortion tests are carried out on the basis of precise sine wave currents sent through the geophone(s), in that the output of the geophone(s) is treated by a fast Fourier transform in order to obtain the value of each of the harmonics of the input sine wave, from which the total distortion is calculated as a fraction of the energy contained in the base sine wave, and in that the distortion is determined as an average over a number of sine periods, preferably 16 periods.

6. The method according to any of the preceding claims, **characterized in that** a phase measurement is carried out on the geophone(s) on the basis of a sine wave produced in the same way as the sine wave for the distortion test.

7. The method according to any of the preceding claims, **characterized in that** depending on whether or not the geophone(s) tested are within acceptable tolerances, an overall Go/NoGo signal is produced.

8. Apparatus for analysing geophones for performing the method according to any of claims 1-7, comprising means for connecting a geophone or a geophone string, a pair of terminals for at least one source of voltage or current to be sent through the geophone(s), means to detect the response of the geophone(s) to voltage or current pulses sent through it (them), means to store or compute reference information, and means to enable a comparison to be made between the impulse response of a geophone or a geophone string tested and the reference information, **characterized in that** the apparatus is an apparatus independent of the seismic recording system and in that it comprises:
   (a) means to automatically derive from the response voltage and/or current, individually and quantitatively, any of the following parameters of the geophone(s):
      damping, resonance frequency, sensitivity,
   (b) means to store or compute corresponding reference parameters quantitatively,
   (c) means to compare the isolated measured parameters with the reference parameters, and
   (d) means to display the differences found in the comparison.

9. Apparatus according to claim 8, **characterized in that** means are provided to store the parameters derived from one measurement as the reference parameters for at least one subsequent measurement.

10. Apparatus according to claim 8 or 9, **characterized in that** means are provided for switching in a precision resistor in parallel to the terminals for connecting the geophones.

11. Apparatus according to any of claims 8-10, **characterized in that** a negative resistance network can be switched in, in parallel to the geophone terminals, and in that the value of the negative resistance network is adjustable.

12. Apparatus according to any of claims 8-11, **characterized in that** a memory is provided which contains, in numerical form, a sine wave, which memory is followed by a D/A converter for performing distortion tests.

13. Apparatus according to any of claims 8-12, **characterized in that** a circuit is provided which is capable of performing fast Fourier transforms on a geophone output signal.

**Revendications**

1.  Procédé d'analyse de géophones, comprenant les étapes consistant à émettre des impulsions de courant électrique dans les géophones, à mesurer les tensions et/ou les courants de sortie en fonction du temps, qui comprennent la réponse impulsionnelle complète fournissant l'information à propos des géophones, et à comparer cette information avec des informations de référence stockées ou calculées, après quoi au moins les différences entre l'information mesurée et l'information de référence sont déterminées pour évaluation et/ou traitement ultérieur(s), et/ou sont affichées, caractérisé en ce que l'un ou plus des paramètres suivants:
    amortissement, fréquence de résonance, sensibilité,
    d'une chaîne de géophones mesurée sont dérivés individuellement de la réponse à l'impulsion, et sont comparés avec des paramètres de références correspondants déterminés pour une chaîne de géophones du même type de ceux qui sont testés, ayant le même nombre de connexions en série et en parallèle.

2.  Le procédé selon la revendication 1, caractérisé en ce que, avant une mesure sur une chaîne à tester, on effectue une mesure d'étalonnage sur une résistance ohmique de précision.

3.  Le procédé selon la revendication 1 ou 2, appliqué à des géophones à amortissement élevé, soit initialement, soit par une dérivation, caractérisé en ce qu'un réseau à résistance négative est couplé en parallèle aux bornes des géophones.

4.  Le procédé selon l'une quelconque des revendications 1 à 3, caractérisé en ce que le courant envoyé dans les géophones pour produire la réponse à l'impulsion est utilisé pour calculer la valeur de la résistance en courant continu de la bobine des géophones.

5.  Le procédé selon l'une quelconque des revendications 1 à 4, caractérisé en ce qu'on réalise des tests de distorsion sur la base des courants sinusoïdaux précis envoyés à travers le ou les géophone(s), en ce que la sortie du ou des géophone(s) est traitée par une transformée de Fourier rapide pour obtenir la valeur de chacun des harmoniques de l'onde sinusoïdale d'entrée, à partir de quoi on calcule la distorsion totale, sous forme d'une fraction de l'énergie contenue dans l'onde sinusoïdale de base, et en ce que la distorsion est déterminée en moyenne sur un certain nombre de périodes sinusoïdales, de préférence 16 périodes.

6.  Le procédé selon l'une quelconque des revendications précédentes, caractérisé en ce que l'on effectue une mesure de phase sur le ou les géophone(s), sur la base d'une onde sinusoïdale produite de la même façon que l'onde sinusoïdale pour le test de distorsion.

7.  Le procédé selon l'une quelconque des revendications précédentes, caractérisé en ce que, selon que les géophones testés sont ou ne sont pas dans des tolérances acceptables, on émet un signal global oui/non.

8.  Dispositif d'analyse de géophones pour la mise en oeuvre du procédé selon l'une quelconque des revendications 1 à 7, comprenant des moyens pour relier un géophone ou une chaîne de géophones, une paire de bornes pour au moins une source de tension ou de courant à envoyer à travers le ou les géophone(s), des moyens pour détecter la réponse du ou des géophone(s) aux impulsions de tension ou de courant qui leur sont adressées, des moyens pour stocker ou calculer des informations de référence, et des moyens pour permettre une comparaison entre la réponse impulsionnelle d'un géophone ou d'une chaîne de géophones testée et l'information de référence, caractérisé en ce que le dispositif est un dispositif indépendant du système d'enregistrement sismique et en ce qu'il comporte:
    (a) des moyens pour déduire automatiquement de la tension et/ou du courant de réponse, individuellement et quantitativement, l'un quelconque des paramètres suivants du ou des géophone(s): l'amortissement, la fréquence de résonance, la sensibilité;
    (b) des moyens pour stocker ou pour calculer quantitativement les paramètres de référence correspondants;
    (c) des moyens pour comparer les paramètres mesurés isolés avec les paramètres de référence; et

(d) des moyens pour afficher les différences obtenues dans la comparaison.

**9.** Dispositif selon la revendication 8, caractérisé en ce qu'il comporte des moyens pour stocker les paramètres déduits d'une mesure comme paramètres de référence pour au moins une mesure suivante.

**10.** Dispositif selon la revendication 8 ou 9, caractérisé en ce qu'il comprend des moyens pour commuter une résistance de précision en parallèle aux bornes de connexion des géophones.

**11.** Dispositif selon l'une quelconque des revendications 8 à 10, caractérisé en ce qu'un réseau à résistance négative peut être connecté en parallèle aux bornes du géophone et en ce que la valeur du réseau à résistance négative est réglable.

**12.** Dispositif selon l'une quelconque des revendications 8 à 11, caractérisé en ce qu'il comporte une mémoire qui contient, sous forme numérique, une onde sinusoïdale, cette mémoire étant suivie d'un convertisseur numérique-analogique pour effectuer des tests de distorsion.

**13.** Dispositif selon l'une quelconque des revendications 8 à 12, caractérisé en ce qu'il comporte un circuit capable d'effectuer des transformées de Fourier rapides sur un signal de sortie de géophone.

**Patentansprüche**

**1.** Verfahren zum Analysieren von Geophonen, das Senden von elektrischen Stromimpulsen durch die Geophone, Messen der Ausgangsspannungen und/oder -ströme als Funktionen der Zeit, welche die Information über die Geophone liefernde gesamte Impulsantwort bilden, und Vergleichen dieser Information mit gespeicherter oder berechneter Bezugsinformation umfaßt, nach welchem mindestens die Abweichungen zwischen gemessener Information und Bezugsinformation für eine weitere Bewertung und/oder Verarbeitung bestimmt und/oder dargestellt werden, dadurch **gekennzeichnet,** daß jeder oder mehrere der folgenden Parameter
Dämpfung, Resonanzfrequenz und Empfindlichkeit
einer gemessenen Folge von Geophonen einzeln von der Impulsantwort abgeleitet und mit entsprechenden Bezugsparametern, die für eine Folge von Geophonen desselben Typs wie die untersuchten bestimmt sind, sowie mit gleicher Anzahl in Reihe und in parallelen Verbindungen verglichen werden.

**2.** Verfahren nach Anspruch 1, dadurch gekennzeichnet, daß vor einer Messung an einer zu untersuchenden Folge eine Eichungsmessung an einem ohmschen Meßwiderstand durchgeführt wird.

**3.** Verfahren nach Anspruch 1 oder 2, angewendet auf Geophone mit hoher Dämpfung, entweder anfänglich oder durch einen Shunt, dadurch gekennzeichnet, daß ein negatives Widerstandsnetzwerk zu den Geophon-Anschlüssen parallel geschaltet wird.

**4.** Verfahren nach einem der Ansprüche 1 bis 3, dadurch gekennzeichnet, daß der durch das/die Geophon(e) zum Erzeugen der Impulsantwort gesendete Strom verwendet wird, um den Geophon-Wicklungs-DC-Widerstandswert zu berechnen.

**5.** Verfahren nach einem der Ansprüche 1 bis 4, dadurch gekennzeichnet, daß Verzerrungstests auf der Grundlage von genauen Sinuswellenströmen, die durch das/die Geophon(e) gesendet werden, durchgeführt werden, daß der Ausgang des Geophons/der Geophone durch eine schnelle Fouriertransfomierte behandelt wird, um den Wert jeder der Oberschwingungen der Eingangssinuswelle zu erhalten, aus der die gesamte Verzerrung als ein Bruchteil der in der Basissinuswelle enthaltenen Energie berechnet wird, und daß die Verzerrung als ein Durchschnitt über eine Vielzahl von Sinusperioden, vorzugsweise über 16 Perioden, bestimmt wird.

**6.** Verfahren nach einem der vorhergehenden Ansprüche, dadurch gekennzeichnet, daß eine Phasenmessung an dem Geophon/den Geophonen auf der Grundlage einer Sinuswelle durchgeführt wird, welche gleichermaßen wie die Sinuswelle für den Verzerrungstest erzeugt wird.

**7.** Verfahren nach einem der vorhergehenden Ansprüche, dadurch gekennzeichnet, daß ein Gesamt-Ja/Nein-Signal erzeugt wird, das davon abhängig ist, ob das/die untersuchte(n) Geophon(e) innerhalb zulässiger Toleranzen liegen oder nicht.

8. Anordnung zum Analysieren von Geophonen zur Durchführung des Verfahrens nach einem der Ansprüche 1 bis 7, die Mittel zum Verbinden eines Geophons oder einer Geophonfolge, ein Paar von Anschlüssen für wenigstens eine Spannungs- oder Stromquelle, die oder der durch das/die Geophon(e) zu senden ist, Mittel zum Erfassen der Antwort des Geophons/der Geophone auf die durch dieses/diese gesendeten Spannungs- oder Stromimpulse, Mittel zum Speichern oder Berechnen von Bezugsinformation und Mittel zum Ermöglichen eines zwischen der Impulsantwort eines untersuchten Geophons oder einer untersuchten Geophonfolge und der Bezugsinformation vorzunehmenden Vergleiches umfaßt, dadurch gekennzeichnet, daß die Anordnung eine vom seismischen Registrierungssystem unabhängige Anordnung ist und daß diese umfaßt:
(a) Mittel zum automatischen, einzelnen und quantitativen Ableiten jeden der folgenden Parameter des Geophons/der Geophone aus der Antwortspannung und/oder dem -strom:
Dämpfung, Resonanzfrequenz, Empfindlichkeit,
(b) Mittel zum quantitativen Speichern oder Berechnen von entsprechenden Bezugsparametern,
(c) Mittel zum Vergleichen der für sich gemessenen Parameter mit den Bezugsparametern und
(d) Mittel zum Darstellen der durch den Vergleich aufgefundenen Abweichungen.

9. Anordnung nach Anspruch 8, dadurch gekennzeichnet, daß Mittel zum Speichern der aus einer Messung abgeleiteten Parameter als Bezugsparameter für wenigstens eine nachfolgende Messung vorgesehen sind.

10. Anordnung nach Anspruch 8 oder 9, dadurch gekennzeichnet, daß parallel zu den Anschlüssen zum Verbinden der Geophone Mittel zum Schalten eines Meßwiderstandes vorgesehen sind.

11. Anordnung nach einem der Ansprüche 8 bis 10, dadurch gekennzeichnet, daß ein negatives Widerstandsnetzwerk zu den Geophon-Anschlüssen parallel schaltbar ist und daß der Wert des negativen Widerstands-Netzwerkes einstellbar ist.

12. Anordnung nach einem der Ansprüche 8 bis 11, dadurch gekennzeichnet, daß ein Speicher vorgesehen ist, der in numerischer Form eine Sinuswelle beinhaltet und dem ein D/A-Wandler zum Durchführen von Verzerrungstests nachgeschaltet ist.

13. Anordnung nach einem der Ansprüche 8 bis 12, dadurch gekennzeichnet, daß eine Schaltung vorgesehen ist, die zum Durchführen von schnellen Fouriertransformierten auf ein Geophon-Ausgangssignal geeignet ist.

Fig. 1

Fig. 2

Fig. 3

Fig. 4

clk 1/32

digital inf.

EP 0 203 227 B1

16

Fig. 5

Fig. 6

17

Fig. 7

Measurement cycle with use of reference :

```
┌─────────────────────────────┐
│        measure offset       │
└─────────────────────────────┘
              │
              ▼
┌─────────────────────────────┐
│        measure ref. &       │
│      correct for  offset     │
└─────────────────────────────┘
              │
              ▼
┌─────────────────────────────┐
│       measure unknown       │
│     quantity & correct for  │
│            offset           │
└─────────────────────────────┘
              │
              ▼
┌─────────────────────────────────────┐
│      calculate true value of        │
│            unknown:                  │
│                                      │
│  measured unknown                    │
│  ────────────────  + true value ref. │
│   measured ref.                      │
│                                      │
│  = true value unknown                │
└─────────────────────────────────────┘
```

$$\frac{\text{measured unknown}}{\text{measured ref.}} + \text{true value ref.} = \text{true value unknown}$$

Fig. 8

START

SYSTEM

LIBRARY

password

COPY

PRINT

MODIFY

INITIATE
MODULE

new
password

from

PRINTER

DISPLAY

password

DATA

LIBRARY

to

module

module

ADD

CHANGE

DELETE

start

start

start

number

number

end

end

end

Fig. 9

EP 0 203 227 B1

Fig. 9 (cont.)

EP 0 203 227 B1

B

measure distortion
measure phase
save test data

full test or Go/NoGo

full

connect ref. string

test string & save data

connect un-known string

start test unknown string

test string & save data if required

display measured parameters

Go/NoGo

connect ref. string & test

test string & save data

connect un-known string

start test unknown string

test string & save data if required

display Go/NoGo etc.

C

connect geophone

start test ?

test geoph. & save data if required

display measured parameters

D

connect geophone

start test ?

test geoph. & save data if required

display Go/NoGo etc.